# EUROPÄISCHE PATENTANMELDUNG

(11) **EP 3 670 458 A1**
(43) Veröffentlichungstag der Anmeldung: **24.06.2020**
(21) Anmeldenummer: 18215755.2
(22) Anmeldetag: 21.12.2018
(51) Int. Cl.: C03B 37/014, C03B 37/012

(54) **VERFAHREN UND VORRICHTUNG ZUR HERSTELLUNG EINES VORPRODUKTS FÜR OPTISCHE FASERN SOWIE DAFÜR GEEIGNETER ADAPTER**

(71) Anmelder: Heraeus Quarzglas GmbH & Co. KG, 63450 Hanau (DE)
(72) Erfinder: PIHAN, Sascha, 63450 Hanau (DE); LAAZ, Alexander, 63450 Hanau (DE)
(74) Vertreter: Staudt, Armin Walter

(57) **Zusammenfassung**

Bekannte Verfahren zur Herstellung eines Vorprodukts für optische Fasern, umfassend die Verfahrensschritte: (a): Bereitstellen eines ein Kernglas enthaltenden Startzylinders, der eine Längsachse, eine Mantelfläche und beidseitig Enden aufweist, (b): Rotieren des Startzylinders um seine Längsachse mittels einer Rotationsein-richtung, und (c): Erzeugen SiO₂-haltiger Partikel durch Flammenhydrolyse oder Oxidation eines siliziumhaltigen Precursors, und Abscheiden der SiO₂-Partikel auf der Startzylinder-Mantelfläche unter Bildung einer SiO₂-haltigen Mantelglasschicht. Um hiervon ausgehend ein modifiziertes Außenabscheideverfahren zur Herstellung eines Vorproduktes für optische Fasern anzugeben, bei dem möglichst wenig mechanische Spannungen auf den Startzylinder einwirken, wird vorgeschlagen, dass zum Rotieren des Startzylinders ein Adapter eingesetzt wird, der einerseits mit der Rotationsein-richtung verbunden wird, und der andererseits zur Aufnahme von einem der Enden des Startzylinders ausgelegt ist, die darin verdrehfest und unter Bildung einer lösbaren Verbindung geführt wird.

## Beschreibung

### Technisches Gebiet

Die Erfindung betrifft ein Verfahren zur Herstellung eines Vorprodukts für optische Fasern, umfassend die Verfahrensschritte:
(a) Bereitstellen eines ein Kernglas enthaltenden Startzylinders, der eine Längsachse, eine Mantelfläche und beidseitig Enden aufweist,
(b) Rotieren des Startzylinders um seine Längsachse mittels einer Rotationseinrichtung, und
(c) Erzeugen SiO₂-haltiger Partikel durch Flammenhydrolyse oder Oxidation eines siliziumhaltigen Precursors, und Abscheiden der SiO₂-Partikel auf der Startzylinder-Mantelfläche unter Bildung einer SiO₂-haltigen Mantelglasschicht.

Weiterhin betrifft die Erfindung einen Adapter zur Halterung eines Startzylinders an einer Rotationseinrichtung in einem Außenabscheideverfahren.

Darüber hinaus geht es bei der Erfindung um eine Vorrichtung zur Herstellung eines Vorprodukts für optische Fasern, insbesondere zur Ausbildung einer SiO₂ enthaltenden Mantelglasschicht auf einer Mantelfläche eines Startzylinders, mit einer Rotationseinrichtung, einer Verschiebeeinrichtung, mindestens einem Abscheidebrenner, wobei die Rotationseinrichtung zur Ausübung eines Drehmoments auf den Startzylinder ausgelegt sind, und wobei die Verschiebeeinrichtung zur Ausübung einer relativen, reversierenden Translationsbewegung zwischen dem Startzylinder und dem mindestens einen Abscheidebrenner ausgelegt ist.

Optische Fasern aus Quarzglas für die Lichtwellenleitung weisen einen optischen Kern auf, der von einem Mantel aus mindestens einer Mantelglasschicht umgeben ist. Die Lichtwellen werden im Wesentlichen im Kern der Faser geführt. Die Herstellung der optischen Fasern erfolgt in der Regel durch Ziehen aus einem Vorprodukt in Form einer Vorform, in der Kern und Mantel angelegt sind.

Zur Herstellung der Mantelglasschicht sind Außenabscheideverfahren bekannt, bei denen durch Hydrolyse oder Oxidation eines siliziumhaltigen Precursors SiO₂-Partikel erzeugt und diese auf dem Außenmantel eines rotierenden Trägers als Schicht abgelagert werden. Als Beispiele für derartige Außenabscheideverfahren seien das OVD-Verfahren (outside vapour phase deposition) und das POD-Verfahren (plasma outside deposition) genannt.

Bei hinreichend hoher Temperatur im Bereich der Trägeroberfläche kommt es zu einem unmittelbaren Verglasen der SiO₂-Partikel, was auch als "Direktverglasen" bekannt ist. Im Unterschied dazu ist beim so genannten "Sootverfahren" die Temperatur beim Abscheiden der SiO₂-Partikel so niedrig, dass eine poröse SiO₂-Sootschicht erhalten wird, die in einem separaten Verfahrensschritt zu transparentem Quarzglas gesintert wird. Sowohl das Direktverglasen als auch das Sootverfahren führen letztlich zu transparentem synthetischem Quarzglas.

Der Träger kann ein sogenannter "Kernstab" sein, der das Kernglas der optischen Faser bereitstellt und der auch einen Teil des Mantelglases enthalten kann. Der Kernstab kann ein radial homogenes oder ein radial nicht homogenes Brechzahlprofil aufweisen. Er kann aus undotiertem Quarzglas bestehen oder den Brechungsindex von Quarzglas verändernde Dotierstoffe enthalten.

### Stand der Technik

Ein POD-Verfahren zur Herstellung einer Vorform für optische Fasern ist beispielsweise in der DE 25 36 457 A1 beschrieben. Dabei wird auf der Mantelfläche eines Kernstabs aus undotiertem Quarzglas ein mit Fluor dotiertes Quarzglas als Mantelglasschicht abgeschieden. Die Fluordotierung der Mantelglasschicht bewirkt eine Absenkung des Brechungsindex' gegenüber undotiertem Quarzglas und damit eine Brechzahldifferenz zwischen dem Kernglas und dem Mantelglas. Zur Erzeugung der Mantelglasschicht wird der Kernstab mit horizontal orientierter Längsachse in eine Glasdrehbank eingespannt und mittels dieser beim Abscheideprozess um seine Längsachse rotiert und reversierend an einem Abscheidebrenner entlanggeführt. Als Abscheidebrenner wird ein induktionsgekoppelter Plasmabrenner eingesetzt, dem ein Gasstrom zugeführt wird, der eine wasserstofffreie Siliziumverbindung als SiO₂-Precursor und Sauerstoff enthält. Außerdem wird in die dem Plasmabrenner zugeordnete Plasmaflamme eine fluorhaltige Verbindung eingeleitet. Aus den Ausgangssubstanzen bilden sich Partikel aus fluordotiertem SiO₂, die auf dem um seine Längsachse rotierenden Träger aus dem Kernglas schichtweise abgeschieden und unter Bildung der fluordotierten SiO₂-Mantelglasschicht auf dem Träger direkt verglast (gesintert) werden.

Der Kernstab besteht aus hochwertigem Quarzglas, das in einem aufwändigen Verfahren erzeugt wird. Durch das Einspannen des Kernstabs in die Glasdrehbank kann aber ein nennenswerter Teil seiner Länge nicht mit Mantelglas beschichtet werden, so dass sich ein hoher Materialverlust ergibt. Um diesen zu vermindern wird der Kernstab häufig verlängert, indem an eines oder an beide stirnseitigen Enden des Kernstabs Haltestäbe oder Halterohre aus einem weniger hochwertigen Quarzglas angeschmolzen und diese in die Glasdrehbank eingespannt werden.

Diese Maßnahme ist beispielsweise bei dem aus der DE 10 2015 109 458 A1 bekannten Sootabscheideprozess und bei dem aus der WO 2013/014258 A2 bekannten Plasma-Abscheideprozess zur Herstellung einer Vorform für eine optische Faser vorgesehen.

Bei dem Verfahren der DE 10 2015 109 458 A1 wird eine Gruppe von Abscheidebrennern reversierend entlang der Außenmantelfläche eines Ausgangsstabes mit horizontal orientierter Längsachse bewegt und dabei Glaspartikel auf dessen Außenmantelfläche abgelagert, so dass sich allmählich eine Schicht aus porösem Quarzglasruß (so genanntem "Soot") aufbaut. Der Ausgangsstab besteht aus einem optischen Kernstab an dessen stirnseitige Enden jeweils ein Haltestab angeschmolzen ist. Die beidseitigen Haltestäbe sind in eine Glasdrehbank eingespannt und übertragen das Drehmoment der Glasdrehbank auf den Kernstab, so dass dieser beim Abscheideprozess um seine Längsachse rotiert. Durch Erhitzen in einem Ofen wird die Schicht aus Quarzglasruß anschließend auf dem Kernstab verglast, so dass eine Vorform für optische Fasern erhalten wird.

Bei dem POD-Abscheideprozess der WO 2013/014258 A2 wird auf einem Kernstab aus nicht dotiertem Quarzglas eine Mantelglasschicht aus fluordotiertem Quarzglas erzeugt. Der Kernstab wird mit horizontal orientierter Längsachse mittels stirnseitig angeschweißter Halterohre in den Spannbacken einer Glasdrehbank gehalten. Mittels der Glasdrehbank ist der Kernstab nicht nur um seine Längsachse rotierbar, sondern auch entlang der Längsachse reversierend hin- und herbwegbar. Mittels eines Plasmabrenners werden SiO₂-Partikel in Gegenwart von Fluor gebildet und auf der Mantelfläche des rotierenden Kernstabs schichtweise abgeschieden. Jede abgeschiedene Schichtlage wird mittels der Plasmaflamme direkt zu dem fluorhaltigen Quarzglas unter Bildung der Mantelglasschicht verglast. Plasmabrenner und Substratkörper werden relativ zueinander bewegt, so dass sich der Plasmabrenner reversierend zwischen zwei Wendepunkten entlang des Kernstabs bewegt.

### Technische Aufgabenstellung

Der Haltestab beziehungsweise das Halterohr (beides im Folgenden auch als "Dummyzylinder" bezeichnet) werden nach Abschluss des Außenabscheideverfahrens vom Kernstab abgetrennt. Dabei, ebenso wie beim Anschweißen des Dummyzylinders, wirken auf den Kernstab hohe Spannungen, die zu Rissen und Brüchen führen können und damit den Ausfall zur Folge haben. Auch beim Außenabscheideverfahren selbst können hohe mechanische Spannungen auftreten, beispielsweise wegen unterschiedlicher thermischer Ausdehnung oder infolge von Fluchtungsfehlern zwischen Dummyzylinder und Kernstab.

Der vorliegenden Erfindung liegt daher die Aufgabe zugrunde, ein modifiziertes Außenabscheideverfahren zur Herstellung eines Vorproduktes für optische Fasern anzugeben, bei dem möglichst wenig mechanische Spannungen auf den Startzylinder einwirken.

Außerdem liegt der Erfindung die Aufgabe zugrunde, einen zum Einsatz in dem modifizierten Außenabscheideverfahren geeigneten Adapter bereitzustellen, der eine betriebssichere Halterung des Startzylinders an der Rotationseinrichtung ermöglicht.

Weiterhin liegt der Erfindung die Aufgabe zugrunde, eine Vorrichtung bereitzustellen, mittels der das modifizierte Außenabscheideverfahren zuverlässig ausführbar ist.

### Allgemeine Beschreibung der Erfindung

Hinsichtlich des Verfahrens wird diese Aufgabe ausgehend von einem Verfahren der eingangs genannten Gattung erfindungsgemäß dadurch gelöst, dass zum Rotieren des Startzylinders ein Adapter eingesetzt wird, der einerseits mit der Rotationseinrichtung verbunden wird, und der andererseits zur Aufnahme von einem der Enden des Startzylinders ausgelegt ist, die darin verdrehfest und unter Bildung einer lösbaren Verbindung geführt wird.

Die Rotationseinrichtung ist zur Rotation des Startzylinders um eine Rotationsachse ausgelegt. Sie verfügt über einen Antrieb und umfasst zwei sich an der Rotationsachse gegenüberliegende Halteeirichtungen zum Greifen des Startzylinders oder einer Verlängerung des Startzylinders wie etwa den aus dem Stand der Technik bekannten, angeschweißten Dummyzylindern oder - wie bei der vorliegenden Erfindung - zum Greifen mindestens eines Adapters oder zweier sich an der Rotationsachse gegenüberliegender Adapter. Typischerweise ist die Rotationseinrichtung eine mit zwei Spannfuttern ausgestattete Glasdrehbank.

Der Adapter ist nicht Bestandteil der Rotationseinrichtung, sondern er ist einerseits unmittelbar oder mittelbar - über ein weiteres mechanisches Bauteil oder über mehrere mechanische Bauteile - mit der Rotationseinrichtung und andererseits mit dem Startzylinder verbunden. Zur Rotation des Startzylinders überträgt die Rotationseinrichtung ein Drehmoment auf den Adapter und der Adapter überträgt das Drehmoment auf den Startzylinder und wirkt insoweit auch als torsionssteifes Kupplungselement zwischen der Rotationseinrichtung und dem Startzylinder.

Zur Übertragung des Drehmoments vom Adapter auf den Startzylinder ist wird letzterer mit mindestens einem seiner Enden im Adapter verdrehfest aufgenommen. Somit ist die Rotationsbewegung des Startzylinders durch die des Adapters eindeutig bestimmt. Die Rotationsachsen der Rotationseinrichtung und des Adapters verlaufen im Idealfall koaxial zur Startzylinder-Längsachse.

Der Startzylinder besteht aus einem einzigen stab- oder rohrförmigen Bauteil, das das Kernglas der optischen Faser bereitstellt. Oder er setzt sich aus mehreren stab- oder rohrförmigen Bauteilen zusammen, die in Richtung seiner Längsachse stoßweise zusammengefügt sind. Im zuletzt genannten Fall kann beispielsweise ein das Kernglas enthaltendes stab- oder rohrförmiges Bauteil mit einem oder beiden seiner stirnseitigen Enden mit einem Dummyzylinder verbunden sein. Dadurch, dass nicht der Startzylinder, sondern der Adapter mit der Rotationseinrichtung verbunden ist, wird der Verlust an wertvollem Kernglas gering gehalten, auch wenn kein Dummyzylinder vorgesehen ist. Insoweit ersetzt der Adapter einen aus dem Stand der Technik bekannten Dummyzylinder; beziehungsweise es ersetzen zwei an den beiden Enden des Startzylinders angreifende Adapter die beiden aus dem Stand der Technik bekannten Dummyzylinder. Und aufgrund der Lösbarkeit der mechanischen Verbindung zwischen Adapter und Startzylinder erübrigt sich diesem Fall die Bildung und die Trennung einer stoffschlüssigen Verbindung zwischen dem das Kernglas enthaltenen Bauteil und einem Dummyzylinder, so dass sowohl der mit diesen Maßnahmen einhergehende zeitliche Aufwand als auch das damit verbundene Bruchrisiko entfallen.

Die Führung des Startzylinder-Endes in der Aufnahme des Adapters wirkt einem seitlichen Ausweichen des Startzylinders aus der Rotationsachse entgegen, kann aber andererseits Bewegungen des Startzylinders - auch infolge des in der Praxis bei Führungen kaum vermeidbaren mechanisches Spiels - zu einem gewissen Grade zulassen, beispielsweise in axialer Richtung (in Richtung der Startzylinder-Längsachse) und/oder senkrecht dazu und/oder ein Spiel in der Achsenneigung. Etwaige Radialversätze und Winkeldifferenzen zwischen den Rotationsachsen von Adapter und Startzylinder können so kompensiert und mechanische Spannungen vermieden werden.

Hinsichtlich der Rotationsbewegung ist eine im Rahmen des Außenabscheideverfahrens hinreichend verdrehfeste Verbindung zwischen Adapter und Startzylinder zu gewährleisten. Diese kann durch Kraftschluss (Reibschluss) oder durch Formschluss oder durch eine Kombination von Kraft- und Formschluss erreicht werden. Bei Formschluss beruht die rotationsfeste Verbindung beispielsweise auf einer nicht-rotationssymmetrischen Innenformeines Adapter-Hohlraums, die mit einer nicht-rotationssymmetrischen Außenform des in den Hohlraum ragenden Startzylinder-Endes korrespondiert. Als Beispiele für nicht-rotationssymmetrische Geometrien seien Verzahnungen oder Abflachungen genannt.

Maßnahmen zur Herstellung einer formschlüssigen Verbindung zur Erzeugung der Verdrehfestigkeit erübrigen sich bei einer bevorzugten Verfahrensweise, bei der die verdrehfeste Führung durch eine kraftschlüssige Verbindung zwischen einer startzylinderseitigen Kontaktierungsfläche und einer adapterseitigen Kontaktierungsfläche bewirkt wird. Dabei haben die beiderseitigen Kontaktierungsflächen vorzugsweise eine Oberflächenrauigkeit, die größer ist als eine mittlere Oberflächenrauigkeit der Startzylinder-Mantelfläche.

Typischerweise hat die Startzylinder-Mantelfläche von dem Aufbringen der Mantelglasschicht eine geringe Oberflächenrauigkeit; beispielsweise eine Oberflächenrauigkeit, die definiert ist durch eine mittlere Rautiefe Rₐ von weniger als 1,5 µm.

Die Übertragung des Drehmoments vom Adapter auf den Startzylinder beruht hier auf Reibschluss zwischen den beiderseitigen Kontaktierungsflächen. Im einfachsten Fall genügt das Eigengewicht des Startzylinders für einen hinreichenden Reibschluss.

Die Messung der Rautiefe erfolgt mittels Tastschnittgerät. Daraus wird Rₐ nach DIN 4762, DIN 4768 und ISO 428/1 als arithmetischer Mittelwert aller Profilwerte des Rauheitsprofils innerhalb einer Einzelmessstrecke ermittelt. Üblicherweise ergibt sich Rₐ aus Mittelung der Ergebnisse von fünf Einzelmessstrecken. Eine "gemittelte Rautiefe" Ra von weniger als 1,5 µm ist beispielsweise durch Flammenpolieren erreichbar.

Der Startzylinder hat Zylinderform, kann aber einen von der Zylinderform abweichende Endabschnitt oder zwei von der Zylinderform abweichende Endabschnitte haben. Bei einer bevorzugten Verfahrensweise wird der Startzylinder mit einem sich verjüngenden Endbereich versehen, von dem sich mindestens ein Teil d in einen nach außen sich erweiternden Hohlraum erstreckt.

Der Hohlraum hat in Richtung der Rotationsachse eine Hohlraumöffnung und kann ansonsten allseitig geschlossen sein. Im Querschnitt hat der Hohlraum beispielsweise Schalen-, Schüssel-, Trichter-, Wannen- oder Kessel-Form. Durch die Hohlraumöffnung ragt das stirnseitige Startzylinder-Ende in den Hohlraum hinein. Der sich verjüngende Endbereich verschwindet dabei vollständig oder - bevorzugt - nur teilweise im Hohlraum. Der Reibschluss zwischen Startzylinder und Adapter kann eigestellt und sofern erforderlich erhöht werden, indem der Adapter in Richtung der Startzylinder-Längsachse gegen den Startzylinder gepresst wird.

Die Außenform des in den Hohlraum ragenden Teilstücks des sich verjüngenden Endbereichs kann an die Hohlraum-Innenform so angepasst sein, dass sich beiderseits eine oder mehrere flächig gegeneinander anliegende und umlaufende Kontaktierungsflächen ergeben, die zu einem festen Reibschluss beitragen.

Dabei hat es sich besonders bewährt, wenn der sich verjüngende Endbereich eine konisch konvexe Außenform hat und der Hohlraum eine korrespondierende konisch konkave Innenform aufweist.

Die rotationssymmetrischen Geometrien von Adapter-Endbereich und Hohlraum sind einfach herstellbar und sie ermöglichen außerdem eine Selbst-Zentrierung des Startzylinders in der Rotationsachse des Adapters.

Dabei hat es sich als günstig erwiesen, wenn ein Teilstück des sich verjüngenden Endbereichs außerhalb des Hohlraums verläuft und wenn die Mantelglasschicht einen Teil dieses Teilstücks bedeckt.

Dadurch werden Spannungen in der Mantelglasschicht vermieden, die sich bilden können, wenn die Mantelglasschicht am Übergang zwischen dem zylinderförmigen Mittelabschnitt des Startzylinders und einem abgeschrägten Endabschnitt endet. Außerdem ergibt sich eine bessere Fixierung der Mantelglasschicht auf der Startzylinder-Mantelfläche. Die Mantelglasschicht wird beispielsweise unter Einsatz von mindestens einem Abscheidebrenner erzeugt, indem der Abscheidebrenner und der Startzylinder relativ zueinander bewegt werden, derart, dass sich der Abscheidebrenner reversierend zwischen zwei Wendepunkten (A) und (B) entlang der Startzylinder-Längsachse bewegt. Die beiderseitigen Wendepunkte dieser Relativbewegung von Abscheidebrenner und Startzylinder definieren im Wesentlichen die beiderseitigen Enden der Mantelglasschicht.

Es hat es sich auch bewährt, wenn der sich verjüngende Endbereich im Bereich zwischen Mantelglasschicht und Adapter mit einem umlaufenden Wulst versehen wird.

Der umlaufende Wulst bildet eine Strömungsbarriere für Edukte und fluide Reaktionsprodukte des Abscheideverfahrens und vermindert Ablagerungen abseits der Mantelglasschicht und insbesondere im Bereich der Aufnahme des Adapters, die ansonsten zu einem Verbacken des Adapters am Startzylinder führen und die Entnahme des Startzylinders aus der Adapter-Aufnahme erschweren können. Sofern der Startzylinder mit einem sich konisch verjüngenden Endbereich versehen ist, befindet sich der umlaufende Wulst vorzugsweise in diesem Endbereich.

Eine vorteilhafte Verfahrensvariante des erfindungsgemäßen Verfahrens zeichnet sich dadurch aus, dass die Herstellung der lösbaren und verdrehfesten Verbindung zwischen Adapter und Startzylinder eine Maßnahme umfasst, bei der der Startzylinder durch longitudinale Bewegung in Richtung der Startzylinder-Längsachse in Eingriff mit dem mit der Rotationseinrichtung verbundenen Adapter gebracht wird.

So wie die verdrehfeste Verbindung zwischen Adapter und Startzylinder durch einfache longitudinale Bewegung des Startzylinders in Richtung seiner Längsachse erzeugt werden kann, so kann sie auch durch Bewegung in entgegengesetzter Richtung wieder gelöst werden. Dadurch ergibt sich eine einfache Installation des Startzylinders in die Rotationseinrichtung und eine einfache Entnahme.

Der Adapter besteht vorzugsweise aus Quarzglas, und ist insbesondere im Hinblick auf hohe Wärmedämmung aus opakem Quarzglas ausgeführt.

Hinsichtlich des Adapters zum Einsatz in einem Außenabscheideverfahrens wird die oben angegebene technische Aufgabe erfindungsgemäß dadurch gelöst, dass er einerseits zur Verbindung mit der Rotationseinrichtung und andererseits zur Verbindung mit dem Startzylinder ausgelegt ist, wobei die Verbindung zwischen dem Adapter und dem Startzylinder lösbar ist, und dass der Adapter eine Aufnahme zur verdrehfesten Führung eines Endes des Startzylinders aufweist.

Der Adapter ist dazu ausgelegt einerseits unmittelbar oder mittelbar - über ein weiteres mechanisches Bauteil oder über mehrere mechanische Bauteile - mit der Rotationseinrichtung und andererseits mit dem Startzylinder verbunden zu werden. Zur Rotation des Startzylinders überträgt die Rotationseinrichtung ein Drehmoment auf den Adapter und der Adapter überträgt das Drehmoment auf den Startzylinder und wirkt insoweit auch als torsionssteifes Kupplungselement zwischen der Rotationseinrichtung und dem Startzylinder. Zur Übertragung des Drehmoments vom Adapter auf den Startzylinder weist dieser einer Aufnahme auf, die zur verdrehfesten Führung des Startzylinders ausgelegt ist. Somit ist die Rotationsbewegung des Startzylinders durch die des Adapters eindeutig bestimmt.

Dadurch, dass nicht der Startzylinder, sondern der Adapter mit der Rotationseinrichtung verbunden ist, können die Dummyzylinder vollständig oder teilweise weggelassen und der Verlust an wertvollem Kernglas gering gehalten werden, und gegebenenfalls erübrigt sich durch die Lösbarkeit der mechanischen Verbindung die Bildung und die Trennung einer stoffschlüssigen Verbindung zwischen dem Startzylinder und dem Adapter, so dass sowohl der mit diesen Maßnahmen einhergehende zeitliche Aufwand als auch das damit verbundene Bruchrisiko entfallen.

Die Führung des stirnseiteigen Startzylinder-Endes in der Aufnahme des Adapters wirkt einem seitlichen Ausweichen des Startzylinders aus der Rotationsachse entgegen, kann aber andererseits Bewegungen des Startzylinders - auch infolge des in der Praxis bei Führungen kaum vermeidbaren mechanisches Spiels - zu einem gewissen Grade zulassen, beispielsweise in axialer Richtung (in Richtung der Startzylinder-Längsachse) und/oder senkrecht dazu und/oder ein Spiel in der Achsenneigung. Etwaige Radialversätze und Winkeldifferenzen zwischen den Rotationsachsen von Adapter und Startzylinder können so kompensiert und mechanische Spannungen vermieden werden.

Eine im Rahmen des Außenabscheideverfahrens hinreichend verdrehfeste Verbindung zwischen Adapter und Startzylinder kann durch Kraftschluss (Reibschluss) oder durch Formschluss oder durch eine Kombination von Kraft- und Formschluss erreicht werden. Bei Formschluss beruht die rotationsfeste Verbindung beispielsweise auf einer nicht-rotationssymmetrischen Innenform der Aufnahme, die mit einer nicht-rotationssymmetrischen Außenform des in die Aufnahme hineinragenden Startzylinder-Endes korrespondiert. Als Beispiele für nicht-rotationssymmetrische Geometrien seien Verzahnungen oder Abflachungen genannt.

Maßnahmen zur Herstellung einer formschlüssigen Verbindung zur Erzeugung hinreichender Verdrehfestigkeit erübrigen sich bei einer bevorzugten Ausgestaltung des Adapters, bei der die verdrehfeste Führung durch eine kraftschlüssige Verbindung zwischen einer startzylinderseitigen Kontaktierungsfläche und einer adapterseitigen Kontaktierungsfläche bewirkt wird, wobei die adapterseitige Kontaktierungsfläche eine Oberflächenrauigkeit aufweist, die definiert ist durch eine mittlere Rautiefe Rₐ von mindestens 100 µm. Die Übertragung des Drehmoments vom Adapter auf den Startzylinder beruht hier auf Reibschluss zwischen den beiderseitigen Kontaktierungsflächen.

Die Messung der Rautiefe erfolgt mittels Tastschnittgerät. Daraus wird Rₐ nach DIN 4762, DIN 4768 und ISO 428/1 als arithmetischer Mittelwert aller Profilwerte des Rauheitsprofils innerhalb einer Einzelmessstrecke ermittelt. Üblicherweise ergibt sich Rₐ aus Mittelung der Ergebnisse von fünf Einzelmessstrecken. Eine "gemittelte Rautiefe" Ra von weniger als 1,5 µm ist beispielsweise durch Flammenpolieren erreichbar.

Bei einer bevorzugten Ausführungsform ist der Adapter zur Halterung eines Startzylinders mit einem sich verjüngenden Endbereich ausgelegt, wobei die Aufnahme einen nach außen sich erweiternden Hohlraum aufweist, in den sich mindestens ein Teil des sich verjüngenden Endbereichs erstreckt.

Der Hohlraum hat in Richtung der Rotationsachse eine Hohlraumöffnung und kann ansonsten allseitig geschlossen sein. Im Querschnitt hat der Hohlraum beispielsweise Schalen-, Schüssel-, Trichter-, Wannen- oder Kessel-Form. Durch die Hohlraumöffnung ragt das stirnseitige Startzylinder-Ende in den Hohlraum hinein. Der sich verjüngende Endbereich verschwindet dabei vollständig oder - bevorzugt - nur teilweise im Hohlraum. Die Außenform des in den Hohlraum ragenden Teils des sich verjüngenden Endbereichs kann an die Hohlraum-Innenform so angepasst sein, dass sich beiderseits eine oder mehrere flächig gegeneinander anliegende, umlaufende Kontaktierungsflächen ergeben, die zur reibschlüssigen Verbindung hinsichtlich der Rotationsbewegung beitragen.

Dabei hat es sich besonders bewährt, wenn der sich verjüngende Endbereich eine konisch konvexe Außenform hat und der Hohlraum eine korrespondierende konisch konkave Innenform aufweist.

Die rotationssymmetrischen Geometrien von Adapter-Endbereich und Hohlraum sind einfach herstellbar und sie ermöglichen zudem eine Selbst-Zentrierung des Startzylinders in der Rotationsachse des Adapters.

Eine bevorzugte Ausführungsform des erfindungsgemäßen Adapters zeichnet sich dadurch aus, dass der Hohlraum von mehreren Teilformen, vorzugsweise von zwei Halbformen, gebildet wird.

Die den Hohlraum umschließenden Teilformen lassen sich einfach öffnen. So ist beispielsweise im Offenzustand das Einlegen des Endes des Startzylinders von oben in eine untere Halbform und gleichermaßen die Entnahme des Startzylinders von unten aus der unteren, geöffneten Halbform erleichtert.

Der Adapter besteht vorzugsweise aus Quarzglas, und ist insbesondere im Hinblick auf hohe Wärmedämmung aus opakem Quarzglas ausgeführt.

Hinsichtlich der Vorrichtung zur Durchführung des vorstehend beschriebenen Außenabscheideverfahrens wird die oben angegebene technische Aufgabe ausgehend von einer Vorrichtung der eingangs genannten Gattung erfindungsgemäß dadurch gelöst, dass zur Halterung des Startzylinders mindestens ein Adapter gemäß vorliegender Erfindung eingesetzt wird.

Die obigen Erläuterungen zum erfindungsgemäßen Verfahren und zum erfindungsgemäßen Adapter gelten auch für die den Adapter aufweisende Vorrichtung. Insbesondere ist der Adapter vom Startzylinder einfach lösbar, so dass die Bildung und die Trennung einer stoffschlüssigen Verbindung zwischen dem Startzylinder und dem Adapter entfallen.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: eine Vorrichtung zur Herstellung eines Vorprodukts für optische Fasern in Form eines SiO₂-Sootkörpers unter Einsatz eines Adapters zur Halterung eines Kernstabs in einem Längsschnitt,
- **Figur 2**: den Adapter von Figur 2 in vergrößerter Darstellung, und
- **Figur 3**: eine Vorrichtung zur Herstellung eines Vorprodukts für optische Fasern in Form einer Vorform mit fluordotiertem Mantelglas unter Einsatz eines Adapters zur Halterung eines Kernstabs in einem Längsschnitt.

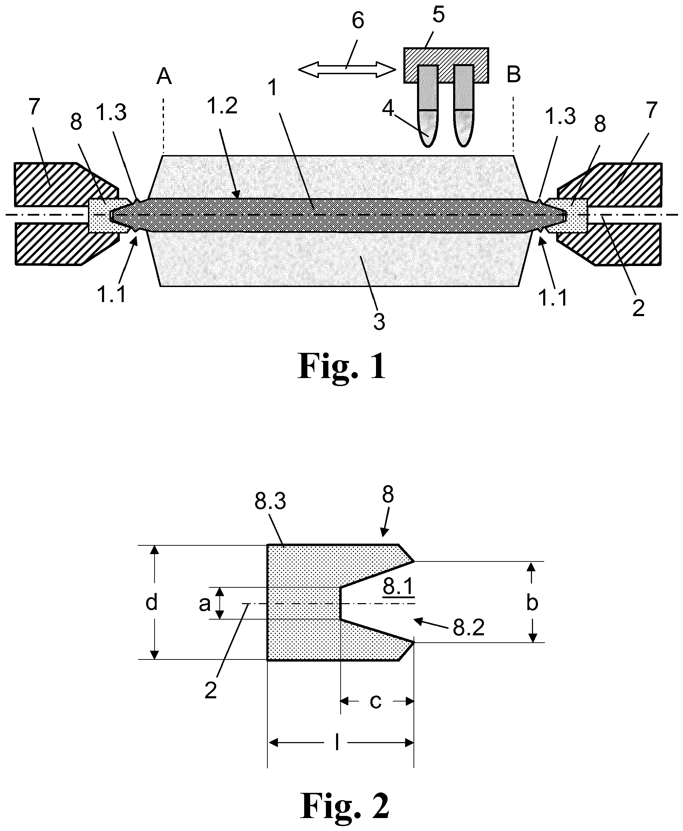

Die in **Figur 1** schematisch dargestellte Vorrichtung umfasst eine Glasdrehbank, angedeutet durch zwei sich gegenüberliegende Spannfutter 7, zwei Adapter 8 aus opakem Quarzglas, die in die Spannfutter 7 eingespannt sind, mehrere Abscheidebrenner 4 zur Erzeugung von SiO₂-Soot, die mit einem Abstand von jeweils 150 mm auf einem gemeinsamen Schlitten 5 montiert sind, und eine mit dem Richtungspfeil 6 angedeutete Verschiebeeinrichtung, mittels der die Abscheidebrenner 5 entlang eines Kernstabs 1 und zwischen den Enden einer sich ausbildenden Mantelglasschicht 3 aus porösem SiO₂-Soot reversierend transversal bewegbar und senkrecht dazu verschiebbar sind.

Der Kernstab 1 stellt das Kernglas der herzustellenden Vorform und der daraus zu ziehende optischen Faser bereit. Er hat eine Länge von 1000 mm und einen Außendurchmesser von 50 mm. An beiden Enden des Kernstabs 1 ist jeweils ein Außenkonus 1.1 angeschliffen. Jeder Außenkonus 1.1 ragt in eine konische Aufnahme (Innenkonus 8.1; siehe Figur 2) des Adapters 8 hinein, verschwindet darin aber nur zum Teil. Die Außenkontur des Außenkonus 1.1 ist an die Innenkontur der Aufnahme 8.1 jeweils so angepasst, dass die konischen Flächen aneinander liegende, umlaufende Kontaktierungsflächen bilden. Die konischen Flächen (Kontaktierungsflächen) sich durch Schleifen erzeugt und haben eine Oberflächenrauigkeit, gekennzeichnet durch eine mittlere Rautiefe Rₐ von mehr als 100 µm, wohingegen die Oberflächenrauigkeit im zylinderförmigen Bereich der Mantelfläche 1.2 des Kernstabs durch Flammenpolitur eingestellt und durch eine mittlere Rautiefe Rₐ von weniger als 1,5 µm definiert ist.

Das Einsetzen des Kernstabs 1 in die Rotationseinrichtung erfolgt, indem eines seiner Enden in den Hohlraum 8.1 des einen Adapters 8 eingeführt wird, und anschließend das andere Ende durch longitudinales Verfahren eines der Spannfutter 7 in Richtung der Längsachse 2 in den Hohlraum 8.1 des gegenüberliegenden Adapters 8 verfahren wird.

Den Abscheidebrennern 4 werden jeweils als Brennergase Sauerstoff und Wasserstoff zugeführt sowie als Einsatzmaterial für die Bildung der SiO₂-Partikel ein Gasstrom, der SiCl₄ enthält. Diese Komponenten werden in der jeweiligen Brennerflamme zu SiO₂-Partikeln umgesetzt und diese auf dem um die Längsachse 2 rotierenden Kernstab 1 unter Bildung der Mantelglasschicht 3 aus porösem SiO₂-Soot abgeschieden. Der Schlitten 5 mit den Abscheidebrennern 4 wird dabei mit einer Translationsgeschwindigkeit von 100 mm/min entlang der sich bildenden Sootschicht 3 zwischen den Wendepunkten (A) und (B) hin- und herbewegt. Die Positionen der Wendepunkte (A) und (B) in Bezug auf den Kernstab 1 sind so gewählt, dass die sich bildende Sootschicht 3 den Übergangsbereich zwischen Außenmantelfläche 1.2 und Außenkonus 1.1 überdeckt. Am Außenkonus 1.1 ist zwischen dem Sootkörper 3 und dem Adapter 8 ein umlaufender Wulst 1.3 ausgeformt.

Zur Rotation des Kernstabs 1 überträgt die Rotationseinrichtung (Spannfutter 7) ein Drehmoment auf den Adapter 8, und der Adapter 8 überträgt das Drehmoment auf den Kernstab 1. Die Rotationsachsen von Spannfutter 7, Adapter 8 und Kernstab 1 verlaufen im Idealfall koaxial zur Längsachse 2. Zur Übertragung des Drehmoments vom Adapter 8 auf den Kernstab 1 ist der Außenkonus 1.1 des Kernstabs 1 mit dem Innenkonus 8.1 des Adapters 8 über die umlaufende Kontaktierungsfläche reibschlüssig (kraftschlüssig) verbunden und somit verdrehfest gelagert. Das Eigengewicht des Kernstabs 1 reicht für einen hinreichenden Reibschluss aus, ohne dass der Adapter 8 nennenswert in axialer Richtung gegen den Kernstab 1 gepresst werden muss.

In Bezug auf eine Bewegung in Richtung der Kernstab-Längsachse 2 sind Kernstab 1 und Adapter 8 lose miteinander verbunden. Eine gewisse Führung ergibt sich nur durch das Zusammenspiel von Außenkonus 1.1 und Innenkonus 8.1. Diese lose Führung des Außenkonus 1.1 in der Aufnahme des Adapters 8 kann - auch aufgrund eines stets vorhandenen mechanischen Spiels - leichte Bewegungen des Kernstabs 1 in lateraler Richtung oder Winkeländerungen in einem gewissen Grade zulassen. Etwaige Radialversätze und Winkeldifferenzen zwischen den Rotationsachsen von Adapter 8 und Kernstab 1 können so kompensiert und mechanische Spannungen vermieden werden.

Der SiO₂-Soot-Abscheideprozess wird beendet, sobald die Mantelglasschicht 3 ausporösem SiO₂-Soot einen vorgegebenen Außendurchmesser erreicht hat. Das anschließende Verglasen der porösen Sootschicht erfolgt in einem Vakuum-Verglasungsofen unter Bildung einer dichten Schicht aus Mantelglas auf dem Kernstab 1.

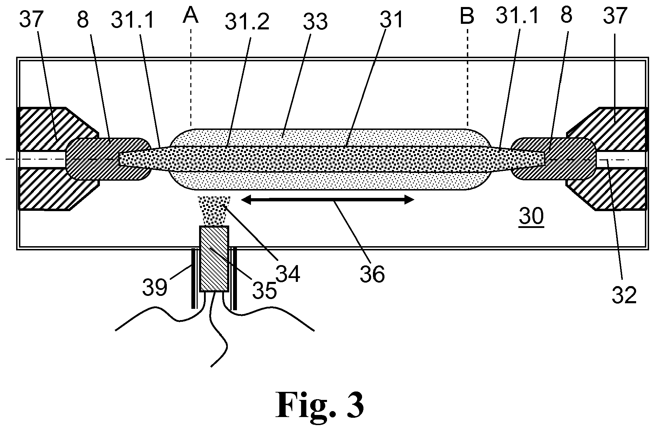

Die in **Figur 3** schematisch dargestellte Vorrichtung dient zur Herstellung einer Mantelglasschicht 33 aus fluordotiertem SiO₂ auf einem Kernstab 31 aus nicht dotiertem Quarzglas nach dem POD-Verfahren. Zum Abscheiden der POD-Mantelglasschicht 33 wird das der Kernstab 31 in eine Abscheidekammer 30 mit horizontal orientierter Längsachse 32 mittels stirnseitig angreifender Adapter 8 aus opakem Quarzglas in den Spannbacken 37 einer (nicht dargestellten) Glasdrehbank gehalten. Mittels der Glasdrehbank ist der Kernstab 31 nicht nur um seine Längsachse 32 rotierbar, sondern auch entlang der Längsachse 32 reversierend hin- und her bewegbar. Der Adapter 8 entspricht dem Adapter, wie er oben der Figuren 1 und 2 beschrieben ist.

Der Kernstab 31 stellt das Kernglas der herzustellenden Vorform und der daraus zu ziehende optischen Faser bereit. Er hat eine Länge von 500 mm und einen Außendurchmesser von 40 mm. An beiden Enden des Kernstabs 31 ist jeweils ein Außenkonus 31.1 angeschliffen. Jeder Außenkonus 31.1 ragt in eine konische Aufnahme (8.1 siehe Figur 2) des Adapters 8 hinein, verschwindet darin aber nur zum Teil. Die Außenkontur des Außenkonus 31.1 ist an die Innenkontur des Innenkonus 8.1 jeweils so angepasst, dass die konischen Flächen aneinander liegende, umlaufende Kontaktierungsflächen bilden. Die konischen Flächen (Kontaktierungsflächen) sich durch Schleifen erzeugt und haben eine Oberflächenrauigkeit, gekennzeichnet durch eine mittlere Rautiefe Rₐ von mehr als 100 µm, wohingegen die Oberflächenrauigkeit im zylinderförmigen Bereich der Mantelfläche 1.2 des Kernstabs durch Flammenpolitur eingestellt und durch eine mittlere Rautiefe Rₐ von weniger als 1,5 µm definiert ist.

Das Einsetzen des Kernstabs 31 in die Rotationseinrichtung erfolgt, indem eines seiner Enden in den Hohlraum 8.1 des einen Adapters 8 eingeführt wird, und anschließend das andere Ende durch longitudinales Verfahren eines der Spannfutter 37 in Richtung der Längsachse 32 in den Hohlraum 8.1 des gegenüberliegenden Adapters 8 verfahren wird.

Dem Plasmabrenner 35 werden als Ausgangssubstanzen SiCl₄, Sauerstoff und SF₆ zugeführt und diese in der Plasmaflamme 34 zu SiO₂-Partikeln umgesetzt. Die Plasmaflamme 34 wird innerhalb eines Brennerrohres 39 aus Quarzglas erzeugt, das von einer Hochfrequenzspule umgeben ist. Zu Beginn des Abscheideprozesses wird zwischen dem Brennerrohr 39 und der Längsachse des Kernstabs 31 ein Abstand von 120 mm eingestellt. Der um seine Längsachse 32 rotierende Kernstab 31 wird entlang des Plasmabrenners 35 reversierend zwischen den Wendepunkten A, B hin- und herbewegt, wie vom Richtungspfeil 36 angedeutet. Dabei werden SiO₂-Partikel schichtweise auf Zylindermantelfläche abgeschieden. Jede abgeschiedene Schichtlage wird mittels der Plasmaflamme 34 direkt zu dem fluorhaltigen Quarzglas der Mantelglasschicht 33 verglast. Die Positionen der Wendepunkte (A) und (B) in Bezug auf den Kernstab 31 sind so gewählt, dass die sich bildende Mantelglasschicht 33 den Übergangsbereich zwischen Außenmantelfläche 31.2 und Außenkonus 31.1 überdeckt.

Zur Rotation des Kernstabs 31 überträgt die Rotationseinrichtung (Spannfutter 37) ein Drehmoment auf den Adapter 8, und der Adapter 8 überträgt das Drehmoment auf den Kernstab 31. Die Rotationsachsen von Spannfutter 37, Adapter 8 und Kernstab 31 verlaufen im Idealfall koaxial zur Längsachse 32. Zur Übertragung des Drehmoments vom Adapter 8 auf den Kernstab 31 ist der Außenkonus 31.1 des Kernstabs 31 mit dem Innenkonus 8.1 des Adapters 8 über die umlaufende Kontaktierungsfläche reibschlüssig (kraftschlüssig) verbunden und somit verdrehfest gelagert. Das Eigengewicht des Kernstabs 31 reicht für einen hinreichenden Reibschluss aus, ohne dass der Adapter 8 zusätzlich in axialer Richtung gegen den Kernstab 31 gepresst werden muss.

In Bezug auf eine Bewegung in Richtung der Kernstab-Längsachse 32 sind Kernstab 31 und Adapter 8 lose miteinander verbunden. Eine gewisse Führung ergibt sich nur durch das Zusammenspiel von Außenkonus 31.1 und Innenkonus 8.1. Diese lose Führung des Außenkonus 1.1 in der Aufnahme 8.1 des Adapters 8 kann - auch aufgrund eines stets vorhandenen mechanischen Spiels - leichte Bewegungen des Kernstabs 31 in lateraler Richtung oder Winkeländerungen in einem gewissen Grade zulassen. Etwaige Radialversätze und Winkeldifferenzen zwischen den Rotationsachsen von Adapter 8 und Kernstab 31 können so kompensiert und mechanische Spannungen vermieden werden.

Der POD-Abscheideprozess wird beendet, sobald die Mantelglasschicht 33 einen vorgegebenen Außendurchmesser erreicht hat. Aus der so erhaltenen Vorform werden optische Fasern gezogen.

**Figur 2** zeigt schematisch den Adapter 8, wie er bei Außenabscheideverfahren eingesetzt wird, die oben anhand der Figuren 1 und 3 erläutert sind. Der Adapter 8 besteht aus opakem Quarzglas und er ist um die Längsachse 2 rotationssymmetrisch. Der dem Innenkonus 8.1 abgewandte, hintere Bereich 8.3 des Adapters 8 dient zum Einspannen in die Spannbacken 7 der Glasdrehbank. Der Innenkonus 8.1 ist abgesehen von der in Richtung der Längsachse 2 weisenden Öffnung 8.2 allseitig geschlossen und hat im Querschnitt Wannenform.

Der Durchmesser des "Wannenbodens" (Abmessung a) liegt vorzugsweise im Bereich von 0,3 bis 0,4 des Kernstab-Durchmessers. Die Wannentiefe (Abmessung c) liegt vorzugsweise im Bereich von 0,4 bis 0,6 des Kernstab-Durchmessers. Und der Maximaldurchmesser des Adapters (Abmessung d) liegt vorzugsweise im Bereich um den Kernstab-Durchmesser.

In den Ausführungsbeispielen sind die in der Figur eingezeichneten Abmessungen:
Im Fall des anhand Figur 1 erläuterten Verfahrens: a =16,7 mm, b = 46 mm; c = 25 mm; l = 120 mm; d = 50 mm.
Im Fall des anhand Figur 3 erläuterten Verfahrens: a =13,3 mm, b = 37 mm; c = 20 mm; l = 100 mm; d = 40 mm.

## Patentansprüche

1. Verfahren zur Herstellung eines Vorprodukts für optische Fasern, umfassend die Verfahrensschritte:
(a) Bereitstellen eines ein Kernglas enthaltenden Startzylinders (1; 31), der eine Längsachse (2; 32), eine Mantelfläche (1.2; 31.2) und beidseitig Enden aufweist (1.3; 31.1),
(b) Rotieren des Startzylinders (1; 31) um seine Längsachse (2; 32) mittels einer Rotationseinrichtung (7; 37), und
(c) Erzeugen SiO₂-haltiger Partikel durch Flammenhydrolyse oder Oxidation eines siliziumhaltigen Precursors, und Abscheiden der SiO₂-Partikel auf der Startzylinder-Mantelfläche (1.2; 31.2) unter Bildung einer SiO₂-haltigen Mantelglasschicht (3; 33),
**dadurch gekennzeichnet, dass** zum Rotieren des Startzylinders (1; 31) ein Adapter (8) eingesetzt wird, der einerseits mit der Rotationseinrichtung (7; 39) verbunden wird, und der andererseits zur Aufnahme von einem der Enden (1.1) des Startzylinders (1; 31) ausgelegt ist, die darin verdrehfest und unter Bildung einer lösbaren Verbindung geführt wird.

2. Verfahren nach Anspruch 1, **dadurch gekennzeichnet, dass** die verdrehfeste Führung durch eine kraftschlüssige Verbindung zwischen einer startzylinderseitigen Kontaktierungsfläche und einer adapterseitigen Kontaktierungsfläche bewirkt wird.

3. Verfahren nach Anspruch 2, **dadurch gekennzeichnet, dass** die Kontaktierungsflächen eine Oberflächenrauigkeit haben, die größer ist als eine mittlere Oberflächenrauigkeit der Startzylinder-Mantelfläche (1.2; 31.2).

4. Verfahren nach einem der vorhergehenden Ansprüche, **dadurch gekennzeichnet, dass** der Startzylinder (1; 31) mit einem sich verjüngenden Endbereich (1.1; 31.1) versehen wird, von dem sich mindestens ein Teil in einen nach außen sich erweiternden Hohlraum (8.1) des Adapters erstreckt.

5. Verfahren nach Anspruch 4, **dadurch gekennzeichnet, dass** der sich verjüngende Endbereich (1.1; 31.1) eine konisch konvexe Form hat und dass der Hohlraum (8.1) eine konisch konkave Geometrie aufweist.

6. Verfahren nach Anspruch 4 oder 5, **dadurch gekennzeichnet, dass** ein Teilstück des sich verjüngenden Endbereichs (1.1; 31.1) außerhalb des Hohlraums (8.1) verläuft und dass die Mantelglasschicht (3; 33) einen Teil dieses Teilstücks bedeckt.

7. Verfahren nach einem der vorhergehenden Ansprüche, **dadurch gekennzeichnet, dass** der sich verjüngende Endbereich (1.1; 31.1) im Bereich zwischen Mantelglasschicht (3) und Adapter (8) mit einem umlaufenden Wulst (1.3) versehen wird.

8. Verfahren nach einem der vorhergehenden Ansprüche, **dadurch gekennzeichnet, dass** die Herstellung der lösbaren und verdrehfesten Verbindung zwischen Adapter (8) und Startzylinder (1; 31) eine Maßnahme umfasst, bei der der Startzylinder (1; 31) durch longitudinale Bewegung in Richtung der Startzylinder-Längsachse (2; 32) in Eingriff mit dem mit der Rotationseinrichtung (7; 37) verbundenen Adapter (8) gebracht wird.

9. Adapter zur Halterung eines Startzylinders (1; 31) an einer Rotationseinrichtung (7; 37) bei einem Außenabscheideverfahren, **dadurch gekennzeichnet, dass** er einerseits zur Verbindung mit der Rotationseinrichtung (7; 37) und andererseits zur Verbindung mit dem Startzylinder (1; 31) ausgelegt ist, wobei die Verbindung zwischen dem Adapter (8) und dem Startzylinder (1; 31) lösbar ist, und dass der Adapter (8) eine Aufnahme (8.1) zur verdrehfesten Führung eines Endes (1.1; 31.1) des Startzylinders (1; 31) aufweist.

10. Adapter nach Anspruch 9, **dadurch gekennzeichnet, dass** die verdrehfeste Führung durch eine kraftschlüssige Verbindung zwischen einer startzylinderseitigen Kontaktierungsfläche und einer adapterseitigen Kontaktierungsfläche bewirkt wird, wobei die adapterseitige Kontaktierungsfläche eine Oberflächenrauigkeit aufweist, die definiert ist durch eine mittlere Rautiefe Rₐ von mindestens 100 µm.

11. Adapter nach Anspruch 9 oder 10, **dadurch gekennzeichnet, dass** zur Führung eines Startzylinders (1; 31) mit einem sich verjüngenden Endbereich (1.1; 31.1) die Aufnahme einen nach außen sich erweiternden Hohlraum (8.1) aufweist, in den sich mindestens ein Teil des sich verjüngenden Endbereichs (1.1; 31.1) erstreckt.

12. Adapter nach Anspruch 11, **dadurch gekennzeichnet, dass** der sich verjüngende Endbereich (1.1; 31.1) eine konisch konvexe Form hat und dass der Hohlraum (8.1) eine konisch konkave Geometrie aufweist.

13. Adapter nach Anspruch 11 oder 12, **dadurch gekennzeichnet, dass** der Hohlraum (8.1) von mehreren Teilformen, insbesondere von zwei Halbformen, gebildet wird.

14. Adapter nach einem der Ansprüche 9 bis 13, **dadurch gekennzeichnet, dass** er aus Quarzglas besteht.

15. Vorrichtung zur Herstellung eines Vorprodukts für optische Fasern, insbesondere zur Ausbildung einer SiO₂ enthaltenden Mantelglasschicht (3; 33) auf einer Mantelfläche eines Startzylinders (1; 31), mit einer Rotationseinrichtung (7; 37), einer Verschiebeeinrichtung (6; 36), mindestens einem Abscheidebrenner (4; 34), wobei die Rotationseinrichtung (7; 37) zur Ausübung eines Drehmoments auf den Startzylinder (1; 31) ausgelegt sind, und wobei die Verschiebeeinrichtung (6; 36) zur Ausübung einer relativen, reversierenden Translationsbewegung zwischen dem Startzylinder (1; 31) und dem mindestens einen Abscheidebrenner (4; 34) ausgelegt ist, **dadurch gekennzeichnet, dass** zur Halterung des Startzylinders (1; 31) mindestens ein Adapter (8) nach einem der Ansprüche 9 bis 14 vorgesehen ist.
